# EUROPÄISCHE PATENTSCHRIFT

(11) **EP 0 386 494 B1**
(45) Veröffentlichungstag und Bekanntmachung des Hinweises auf die Patenterteilung: **03.05.1995**
(21) Anmeldenummer: 90102777.1
(22) Anmeldetag: 13.02.1990
(51) Int. Cl.: A47C 1/024, F16F 7/02, E05F 5/02

(54) **Vorrichtung zum Verhindern unbeabsichtigter Bewegungsabläufen bei mindestens einer um eine Achse kippbaren Fläche, wie Rückenlehne von Stühlen, Türklappe an Schränken u.a.**
Device to prevent unintentional movements of planes tiltable around at least one axis, such as backrests of chairs, doors of cabinets, etc.
Dispositif pour empêcher des mouvements involontaires de surfaces inclinables au moins sur un axe, tel que dossiers de chaises, portes d'armoires, etc.

(30) Priorität: 07.03.1989 DE 3907251
(43) Veröffentlichungstag der Anmeldung: 12.09.1990
(73) Patentinhaber: SIFA Sitzfabrik GmbH, 92237 Sulzbach-Rosenberg (DE)
(72) Erfinder: Neumüller, Konrad, W-8501 Burgthann (DE)
(74) Vertreter: Merten, Fritz

(56) Entgegenhaltungen:
- FR-A- 1 025 954
- FR-A- 2 127 254
- US-A- 4 236 606

## Beschreibung

Die Erfindung betrifft eine Vorrichtung zum Verhindern unbeabsichtigter Bewegungsabläufen bei mindestens einer um eine Achse kippbaren Fläche, wie Rückenlehne von Stühlen, Türklappe an Schränken u. a., mit den Merkmalen des Oberbegriffs des Anspruchs 1.

Es ist allgemein bekannt, diverse, aufeinander zu bewegende Flächen, wie z. B. Lehnen an Stühlen, Klappen an Schränken oder Deckel an Behältern u. a., mit Gelenkachsen zu versehen und diese Flächen um diese Achsen entsprechend zu kippen. Bei solchen aufeinander zu bewegenden Flächen ist es auch bekannt, Dämpfungsmittel zwischen diesen Flächen vorzusehen, um ein schnelles Fallen der einen Fläche auf die andere zu verhindern. Hierbei haben sich als Dämpfungsmittel mechanische Federn oder Gasfedern, oder hydraulische Federn weitgehend durchgesetzt. Diese Dämpfungsmittel haben jedoch den Nachteil, daß sie sehr viel Bewegungsenergie für das beabsichtigte Bewegen der Flächen erfordern, so daß besonders bei schweren Flächen diese mit großem Aufwand in die Schließ- oder Öffnungslage bzw. in eine andere Position gebracht werden können.

Bei Anwendung derartiger Dämpfungsmittel, z. B. bei Stühlen, wie sie heute in Büros und Werkräumen als Arbeitsdrehstühle verwendet werden, kommt es in der Regel darauf an, die aufeinander bewegbaren Teile, in einem solchen Fall die Lehne gegen die Sitzfläche, so abzudämpfen, daß die Lehne in allen Phasen der Benutzung des Stuhles weder gegen den Rücken einer sitzenden Person schlägt, noch so schnell zurückschnallt, daß beim Tragen des Stuhles die Lehne, z. B. nach vorn kippt und dabei eine Person verletzt. Zu diesem Zweck wird die Vorrichtung zwischen dem Lehnenträger oder der Sitzfläche oder den Grundkörper eines Stuhles eingesetzt, wobei diese dämpfend der Längenänderung beim Bewegen der einen Fläche gegen die andere folgt.

Neben dem Verzehr erheblicher Energien beim Aufeinanderbewegen der Flächen, haben insb. die als Gas- oder Hydraulikfedern ausgeführten Dämpfungsmittel den Nachteil, daß sie nach einer gewissen Anwendungszeit ihr Dämpfungsmittel, z. B. Öl, verlieren und dann nicht nur den Dämpfungsvorgang nicht mehr ausüben, sondern auch den Fußboden durch herabtropfendes Öl erheblich verschmutzen. Derartige Verschmutzungen des Fußbodens führen zu erheblichen Schäden, besonders dann, wenn als Fußboden, wie dies heute in vielen Büros der Fall ist, ein Teppichboden verlegt ist.

Aus der FR-A-1025954 ist ein Stoßdämpfer bekannt, der konische Bremsflächen auf einer Spindel und an der Innenwand seines Gehäuses aufweist, die nach einem gedämpften Stoß, d. h. nach dem beide Teile des Stoßdämpfers ineinander geschoben werden, eine umgekehrte Bewegung ermöglichen, die durch die Reibung zwischen beiden konischen Teilen gedämpft wird.

Hier setzt nun die Erfindung ein, der die Aufgabe zugrunde liegt, ein auf mechanischem Prinzip arbeitendes Dämpfungsmittel dahingehend weiterzubilden, daß die aufeinander zu bewegenden Flächen nicht nur mit äußerst geringer Kraft bewegt, sondern das Dämpfungsmittel, insb. bei ruckartigen Bewegungen der aufeinander zu bewegenden Flächen, eine Blockierung der Bewegung der Flächen ermöglicht, ohne dabei von außen betätigt zu werden.

Gemäß der Erfindung wird diese Aufgabe bei einer Vorrichtung der eingangs genannten Art durch die Merkmale des kennzeichnenden Teils des Anspruchs 1 gelöst.

Durch diese Maßnahmen wird ein Dämpfungsmittel bzw. eine Vorrichtung geschaffen, die nicht nur die gestellte Aufgabe in vorteilhafter Weise erfüllt, sondern darüber hinaus eine Reihe von weiteren Vorteilen ermöglicht. So ist es beispielsweise möglich die Vorrichtung äußerst kompakt auszuführen und die blockierenden Teile derselben so aufeinander abzustimmen, daß sie im normalen Bewegungsablauf der aufeinander zu bewegenden Flächen kaum eines Kraftaufwandes bedürfen, bei ruckartigen Bewegungen dieser Flächen aber schlagartig den Bremsvorgang deren Bewegungsabläufe auslösen und die Flächen begrenzen, bzw. diese stillsetzen und deren Bewegungsablauf erst nach gewisser Entspannung selbsttätig wieder freigeben. Hinzu kommt, daß durch die mechanische Auslösung des Brems- und damit auch Sicherungsmechanismus der Vorrichtung die vorgenannten Nachteile bekannter Dämpfungsmittel, bei denen ein Öl als Dämpfungsmittel verwendet wird, ausgeschlossen werden, so daß diese Vorrichtung wegen ihrer Sicherheit gegen Leckage u. a. auch dort eingesetzt werden kann, wo auf die Sauberkeit, z. B. eines Teppichbodens besonderer Wert gelegt wird.

Ein weiterer Vorteil dieser Vorrichtung kann noch darin gesehen werden, daß diese sehr einfach auch bei Möbeln eingesetzt werden kann, wo es z. B. gilt, klappenförmige Türen nach deren Öffnen nicht ruckartig in deren Schließlage fallen zu lassen. Dies kann bei Küchenmöbeln, wie auch anderen Wohnmöbeln durchaus der Fall sein, denn auch dort können sich Verletzungen ergeben, wenn oft schwere Klappen unbeabsichtigt nach unten fallen, weil die bekannten, sonst üblichen Scharniere diesen ruckartigen Bewegungsablauf nicht verhindern bzw. stillsetzen können.

Weitere vorteilhafte Weiterbildungen der Erfindung können insb. den Unteransprüchen entnommen werden.

In der Zeichnungen ist ein Ausführungsbeispiel der Erfindung am Beispiel dessen Anwendung bei Arbeitsdrehstühlen schematisch dargestellt. Es zeigt:
- Fig. 1: eine Seitenansicht auf die Vorrichtung im betriebsbereiten Zustand,
- Fig. 2: eine Draufsicht auf die Vorrichtung gem. Fig. 1,
- Fig. 3: ein Anwendungsbeispiel der Vorrichtung bei einem Arbeitsdrehstuhl, wobei diese zwischen dem Grundkörper des Stuhls und dessen Lehnenträger eingespannt ist,

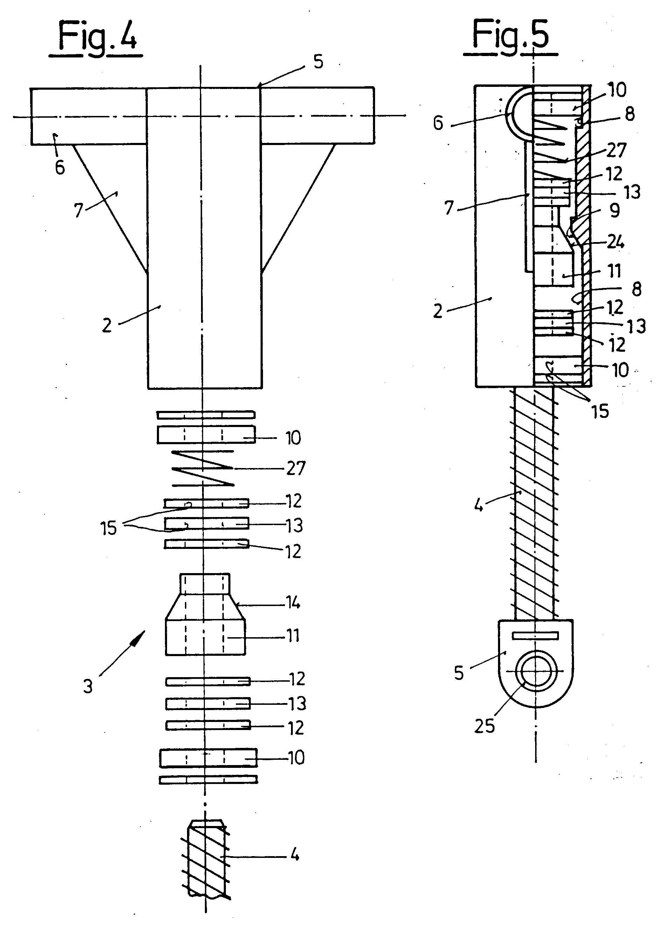

- Fig. 4: eine explosionsartige Darstellung der Vorrichtung mit deren einzelnen Bauteilen und
- Fig. 5: eine Darstellung der Vorrichtung im eingebauten Zustand, wobei die eine Hälfte des den Bremsmechanismus aufnehmenden Gehäuses zur besseren Darstellung der Führungs- und Bremsflächen aufgeschnitten ist.

Die Vorrichtung 1 gem. der Erfindung wird im wesentlichen von einem vorzugsweise rohrförmigen Gehäuse 2 mit in diesem eingebauten Teilen eines Sicherungsmechanismus 3 und einer in dieses Gehäuse ein- und ausführbaren Spindel 4, welche, wie auch das Gehäuse an je einem T-förmigen Halter 5 gehalten ist, gebildet.

Das Gehäuse 1, das vorzugsweise zylindrisch ausgeführt ist, ist an seinem einen Ende mit einem quer verlaufenden, vorzugsweise als Rohr ausgeführtem Befestigungsmittel 6 verbunden und kann zur Versteifung desselben zwischen sich und diesem Befestigungsmittel Rippen 7 aufweisen, die ein Knicken der beiden Teile gegeneinander verhindern.

Im Innern des Gehäuses 2 sind Führungs- und Bremsflächen 8,9 vorgesehen, wobei die Führungsflächen 8 dem Aufnehmen von Endscheiben 10, und die Bremsflächen 9 dem kraftschlüssigen Verbinden eines vorzugsweise als Rundmutter ausgeführten Formkörpers 11 dienen. Zwischen jeder Endscheibe 10 und diesem Formkörper 11 sind Druckscheiben 12 mit je einem dazwischen liegendem Kugellager 13 vorgesehen, und es sind diese Druckscheiben und das Kugellager, in axialer Richtung des Formkörpers bzw. des Gehäuses 2 gesehen, sowohl vor als auch hinter dem Formkörper 11 angeordnet. Die Endscheiben 10 vor und hinter dem Formkörper 11 und somit an beiden Enden des Gehäuses 2, sind mittels eines Sprengringes 14 oder einer sonstigen Befestigung im Gehäuse 2 fixiert. Die Endscheiben 10, wie auch die Druckplatten 12, die Kugellager 13 und der Formkörper 11 weisen symmetrisch zur Längsmittelachse X des Gehäuses 2 je eine Bohrung 15 auf, durch welche die am anderen T-förmigen Halter 5 angeschlossene Spindel 4 hindurchgeführt ist.

Während die Endscheiben 10 und ggf. auch die Druckplatten 12 und die Kugellager 13 die jeweilige Bohrung 15 lediglich für die Führung der Spindel 4 aufweisen, ist die Bohrung des Formkörpers 11 zusätzlich mit einem Gewinde versehen, so daß bei Längenänderungen der Vorrichtung 1, d. h. Zusammenführen deren T-förmigen Halter 5 oder Auseinanderziehen derselben der Formkörper 11 auf der Spindel 4 drehbar gleitet.

Im Bereich der Mitte des Gehäuses 2, d. h. im Bereich dessen Gürtelebene Y, weist dieses die Bremsflächen 9 für den Formkörper 11 auf, und es ist der Formkörper selbst mit entsprechenden Bremsflächen 24 versehen, die auf diese Bremsflächen 9 des Gehäuses 2 auflaufen und sich dort kraftschlüssig verbinden.

Das Besondere bei dieser Vorrichtung 1 liegt darin, daß bei normalem Bewegungsablauf, z. B. zweier zueinander zu bewegender Flächen 17,18 diese ohne Hemmung bewegt werden können, im Moment aber, bei dem eine Fläche 17 oder 18 aus der normalen Bewegungsgeschwindigkeit abdriftet und somit ruckartig und schnell sich zu bewegen beginnt, der Formkörper 11 sofort gegen dessen Bremsflächen 9 am Gehäuse 2 aufläuft und das weitere Bewegen der Spindel 4 in diesem Formkörper und im Gehäuse blockiert. Auf diese Weise ist es nicht möglich, daß eine Fläche z. B. 17 bei deren Herabfallen schneller wird und schlagartig auf die andere Fläche 18 aufschlägt. Die Vorrichtung 1 gemäß der Erfindung ermöglicht also ein dosiertes Bewegen zweier aufeinander zu bewegender Flächen 17,18 und tritt nur dann in Funktion, wenn z. B. die eine Fläche 17 oder 18 ruckartig bzw. schnell sich zu bewegen beginnt. Auf diese Weise kann es nicht vorkommen, daß z. B. eine Fläche 17 oder 18 sich unbeabsichtigt schnell bewegt und durch deren Herabfallen oder Kippen eine Person verletzt oder sich selbst beschädigt.

Bei Anwendung dieser Vorrichtung 1, z. B. bei Arbeitsdrehstühlen 19, empfiehlt es sich, die Vorrichtung zwischen einem Lehnenträger 20 für die Lehne 21 des Stuhles und einem Grundkörper 22, der die Sitzfläche 23 des Stuhles trägt, gelenkig anzuschließen. Bei einer derartigen Anordnung würde es bedeuten, daß die Lehne 21 den normalen Bewegungsabläufen, d. h., den gewollten Abläufen mühelos folgt, beim Bücken der Person, z. B. nach vorn, nicht schlagartig auf den Rücken der Person aufschlägt, sondern einem sonstigen, vielfach eingebautem Dämpfungsmechanismus, z. B. einer Rückhohlfeder, sinnvoll folgt. Auf diese Weise kann es also auch nicht vorkommen, daß z. B. beim Heben des Stuhles 19 die Lehne 21 nach vorn schnallt und beispielsweise auf den Kopf der den Stuhl tragenden Person aufschlägt.

Die Vorrichtung 1 bietet somit ein erhebliches Sicherheitsmoment bei div. Bewegungsabläufen von zwei aufeinander zu bewegenden Teilen d. h. Flächen 17,18 und kann demnach überall dort angewendet werden, wo eine Gefahr besteht, daß bei unbeabsichtigtem Auslösen des Bewegungsablaufes Verletzungen an Personen oder Beschädigungen an Sachen auftreten können. Solche Anwendungen können, wie in dieser Anmeldung angedeutet, überall dort sein, wo zwei Flächen zueinander stehen oder Klappen, Deckel u. a. auf deren Rahmen aufschlagen. Dies schließt jedoch nicht aus, die erfindungsgemäße Vorrichtung 1 auch für andere Anwendungen vorzusehen, wo es gilt, bei ruckartigen Bewegungen eien Bremswirkung auszuüben.

Für die einwandfreie Funktion der Vorrichtung 1 ist ferner wichtig, daß deren Spindel 4 ohne großen Kraftaufwand sich im Formkörper 11 drehen läßt und somit bei gleichmäßigem Bewegungsablauf des Formkörpers sich an den Bremsflächen 9 des Gehäuses 2 nicht kraftschlüssig verkeilt. Die Bremsflächen 9 am Gehäuse 2, wie auch die Bremsflächen 24 am Formkörper 11 sind konusförmig ausgeführt. Die Neigung beider Bremsflächen 9,24 ist so abgestimmt, daß diese Flächen sich zwar verkeilen, daß sie sich aber sofort wieder lösen, wenn der Bewegungsablauf der Vorrichtung 1 das normale Tempo wieder erreicht. Dies bedeutet, daß die Spindel 4, solange sie gleichmäßig in den Formkörper 11 eintaucht und diesen dabei um die Längsmittelachse X dreht, diese in deren hin und her gehenden Bewegung nicht behindert wird. Aufgrund der Anordnung der Bremsflächen 9,24 am Gehäuse 2 einerseits und am Formkörper 11 andererseits läßt sich die Spindel 4 nur in einer Bewegungsrichtung hemmen, nämlich dann, wenn die Bremsflächen 9,24 von Formkörper 11 und Gehäuse 2 aufeinander zu liegen kommen.

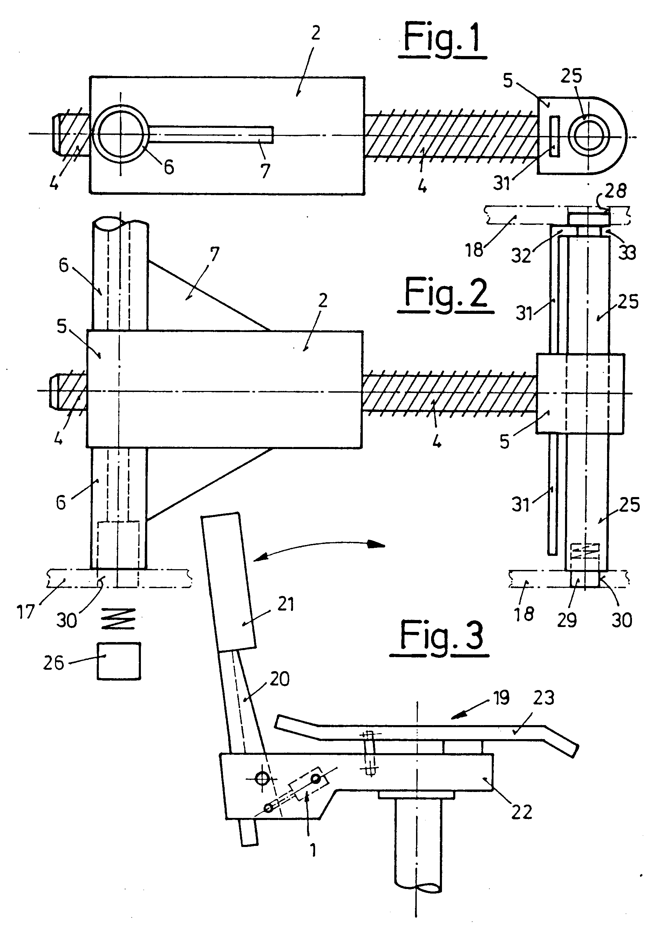

Um die Vorrichtung 1 an den aufeinander bewegbaren Teilen bzw. Flächen 17,18 befestigen zu können, sind am Gehäuse 2 und an der Spindel 4 die Halter 5 vorgesehen. Hierbei kann der am Gehäuse 2 vorgesehene Halter 5 als das quer zum Gehäuse verlaufende Befestigungsmittel, z. B. in Form eines Rohres 6 und das quer zur Spindel 4 verlaufende Befestigungsmittel, z. B. als ein Bolzen 25 ausgeführt sein. Bei Anwendung eines Rohres 6 als Befestigungsmittel ist es empfehlenswert, die Fixierung desselben am zu bewegenden oder feststehenden Teil bzw. der Fläche 17 oder 18 mittels federbelasteter Noppen 26 vorzunehmen. Ein solcher Noppen 26 nebst einer ihn herausdrückenden Feder 27 ist in Fig. 2 dargestellt.

Analog dieser Befestigungsmittel des Halters 5 des Gehäuses 2 am zu bewegenden Teil, d. h. Fläche 17 oder 18 kann auch der Halter 5 der Spindel 4 mittels des Bolzens 25 am anderen Teil befestigt sein. Hierbei kann das eine Ende des Bolzens 25 in einer Bohrung 28 des Teils 17 oder 18 fixiert und das andere Ende des Bolzens über einen federbelasteten Noppen 29 in einer weiteren Bohrung 30 des gleichen Teils formschlüssig abgestützt sein. Um den Bolzen 25 dabei symmetrisch zum Halter 5 auszurichten, kann am Halter ein winkelförmiger Steg 31 angebracht sein, dessen endseitige Abwinkelung 32 in eine Ringnut 33 des Bolzens eingreift.

Die Vorrichtung 1 und hier insbesondere das Gehäuse 2 und die Spindel 4 können dabei aus Metall, die restlichen Teile des Sicherungsmechanismus 3 aus Kunststoff gefertigt sein. Dies schließt jedoch nicht aus, alle Teile aus Metall oder Kunststoff auszuführen.

## Patentansprüche

1. Vorrichtung zum Verhindern unbeabsichtigter Bewegungsabläufe bei einer um eine Achse kippbare Fläche, wie Rückenlehne (21) von Stühlen, Türklappe an Schränken, wobei diese Fläche gegen eine andere feste Fläche bewegbar ist,
wobei die Vorrichtung zwischen diesen Flächen eingebaut, sowie für die Freigabe des Bewegungsablaufs mit einem an der einen Fläche ortsfesten T-förmigen Halter (5) mit einer an diesem befestigten Spindel (4) und einem, an der anderen Fläche ortsfesten rohrförmigen Gehäuse (2) mit einem T-förmigen Halter ausgerüstet ist,
wobei das rohrförmige Gehäuse (2) an dessen Innenwand in axialer Richtung hintereinander Führungs- und Bremsflächen (8,9) aufweist und die Spindel (4) in axialer Richtung beweglich durch das rohrförmige Gehäuse (2) geführt ist,
und wobei die Spindel innerhalb des Gehäuses (2) einen mit konischen Bremsflächen versehenen Formkörper (11) aufweist, der auf dieser drehbar geführt ist,
**dadurch gekennzeichnet**,
daß auf der Spindel (4) vor und hinter dem Formkörper (11) bewegbare Druckplatten (12) und Kugellager (13) angeordnet ist,
daß der mit konischen Bremsflächen (24) versehene Formkörper (11) bei ruckförmigem Bewegungsablauf der kippbaren Fläche (18) an der Bremsfläche (9) des Gehäuses (2) kraftschlüssig feststellbar ist,
und daß zwischen dem Formkörper (11) und dem den konischen Bremsflächen (9) abgewandten Ende des Gehäuses (2) ein Federelement (27) eingesetzt ist.

2. Vorrichtung nach Anspruch 1,
**dadurch gekennzeichnet**,
daß der eine Halter (5) nach Art einer Öse mit einem durch deren Auge geführten Bolzen (25) für den Anschluß dieses Halters an der einen Fläche (17 oder 18), und daß der andere Halter (5) neben dessen rohrförmigen Gehäuse (2) quer verlaufende Befestigungsmittel, insb. in Form von Rohrstutzen (6) für Noppen (26) aufweist, und daß dieser Halter über die Noppen an der anderen Fläche (17 oder 18) angeschlossen ist.

3. Vorrichtung nach Anspruch 1,
**dadurch gekennzeichnet**,
daß im Gehäuse (2) und axial zu diesem die Spindel angeordnet, und daß entlang der Längsmittelachse (X) des Gehäuses (2) der Formkörper (11) vorgesehen ist, wie auch zu beiden Seiten desselben je ein Drucklager und eine dieses axial begrenzende Endscheibe (10) vorgesehen sind, und daß mindestens zwischen einem Drucklager und einer Endscheibe (10) eine Feder eingespannt ist.

4. Vorrichtung nach Anspruch 1,
**dadurch gekennzeichnet**,
daß der Formkörper (11) nach Art einer Rundmutter mit einer darauf angeformten Bremsfläche (24) ausgeführt ist, und daß für diese Bremsfläche eine konische Bremsfläche (9) an der Innenwand des Gehäuses (2) vorgesehen ist.

5. Vorrichtung nach Anspruch 1, wobei diese bei einem Sitzträger für Stühle, insb. Arbeitsdrehstühle (19), einsetzbar ist, und dieser Sitzträger von drei Funktionsteilen gebildet wird, von denen ein Funktionsteil ein mit einer Stütze des Stuhles verbindbarer Grundkörper (22), ein weiteres Funktionsteil eine mit diesem gelenkig verbundene Sitzplattenbefestigung und ein weiteres Funktionsteil ein mit dieser wiederum gelenkig befestigter Rückenlehnenträger (20) ist, sowie diese Funktionsteile über ihre Kippbarkeit erlaubende Gelenkachsen miteinander verbunden sind, von denen wiederum das als Rückenlehenträger (20) ausgeführte Funktionsteil an dem als Grundkörper (22) ausgeführten und an der Stütze fixierten Funktionsteil angeschlossen ist, und an dem als Sitzplattenbefestigung ausgeführten Funktionsteil bewegbar geführt ist, wie auch zur Arretierung der Bewegung der Funktionsteile die als Sicherungsmittel ausgeführte Vorrichtung (1) am Sitzträger vorgesehen ist,
**dadurch gekennzeichnet**,
daß die Vorrichtung (1) einerseits am Rückenlehnenträger (20) und andererseits am Grundkörper (22) über deren jeweiligen Halter (5) gelenkig angeschlossen ist.

## Claims

1. A device to prevent unintentional slipping movements of a surface tiltable around an axis, such as back rests (21) of chairs, doors of cabinets, in which said surface is movable against another fixed surface,
in which the device is fitted between these surfaces as well as being equipped for the release of the slipping movement with, at a firmly fixed point on one of the surfaces, a T-shaped support (5) together with a spindle (4) attached to it and a tubular casing (2) firmly fixed at a point on the other surface together with a T-shaped support,
in which the tubular casing (2) has, on its inner wall, guideway and braking surfaces (8, 9) lying in an axial direction one behind the other and the spindle (4) is movable in an axial direction through the tubular casing (2), and in which the spindle has, located within the casing (2) and provided with conical braking surfaces, a contoured element (11) which can be rotated upon it,
characterised in that,
located on the spindle (4) both in front of and behind the contoured element (11), there are movable thrust washers (12) and bearings (13),
in that the contoured element (11) being provided with conical braking surfaces (24) can be moved during any jolting slip movement of the tiltable surface (18) in contact with the braking surface (9) of the casing (2),
and in that, between the contoured element (11) and the end of the casing (2) which faces away from the conical braking surfaces (9), is fitted a spring component (27).

2. A device according to claim 1,
characterised in that
one of the supports (5) comprises a component in the form of an eyelet with a rod (25) inserted through its eye for the connection of this support to one of the surfaces (17 or 18) and in that the other support (5) adjacent to its tubular casing (2) comprises attachment means lying at a right angle and being in the form of tubular connections (6) for knobs (26), and in that this support is connected by means of the knobs on the other surface (17 or 18).

3. A device according to claim 1,
characterised in that,
the spindle is located within the casing (2) and positioned axially to it, and in that the contoured element (11) is positioned on the longitudinal median axis (X) of the casing (2) together with, and positioned on each side of it respectively, a thrust bearing and an end plate (10) limiting it axially, and in that, a spring is located at least between one thrust bearing and one end plate (10).

4. A device according to claim 1,
characterised in that
the contoured element (11) is constructed in the form of a circular nut with a braking surface (24) moulded upon it, and in that, for this braking surface, a conical braking surface (9) is provided on the inner wall of the casing (2).

5. A device according to claim 1, whereby the latter can be applied to a seating bracket for chairs, particularly office swivel chairs (19), and whereby this seating bracket is formed of three functional parts of which one functional part is a base plate (22) connectable to a support rest of the chair, a further functional part is a seating plate attachment flexibly connected to the first and a further functional part is a back rest bracket (20) once again flexibly attached to the previous part, as well as these functional parts being connected to one another by means of their tilt-permitting articulated axes of which, once again, the functional part constructed as a back rest bracket (20) is connected to the functional part constructed as a base plate (22) and fixed to the support rest and is movably operated on the functional part constructed as a seating plate attachment and as well as the device (1) constructed as a securing agent provided on the seating bracket for arresting the movement of the functional parts,
characterised in that
the device (1) is pivotally attached, on the one hand, to the back rest bracket (20) and, on the other hand, to the base plate (22) by means of their respective supports (5).

## Revendications

1. Dispositif pour empêcher des mouvements imprévus d'une surface rabattable autour d'un axe, telle qu'un dossier (21) de chaise, un abattant de porte d'armoire, cette surface pouvant se déplacer contre une autre surface fixe,
où le dispositif est installé entre ces surfaces et, pour débloquer le déplacement, est muni d'un support (5) en forme de T, en position fixe sur l'une des surfaces et comportant une broche (4) qui lui est fixée, et d'un carter (2) tubulaire, en position fixe sur l'autre surface et comportant un support en forme de T,
où le carter tubulaire (2) présente, sur sa paroi intérieure, des surfaces de guidage et de freinage (8, 9) disposées l'une derrière l'autre dans une direction axiale, et la broche (4) est guidée dans une direction axiale de façon à pouvoir se déplacer en passant par le carter tubulaire (2),
et où la broche comporte, à l'intérieur du carter (2), une pièce façonnée (11), pourvue de surfaces de freinage coniques, pièce façonnée guidée en rotation sur ces dernières,
caractérisé en ce que, sur la broche (4), en avant et en arrière de la pièce façonnée (11), se trouvent des plaques de compression mobiles (12) et des roulements à billes (13),
que la pièce façonnée (11) pourvue de surfaces de freinage coniques (24) peut, en présence d'un mouvement par saccades de la surface rabattable (18), être fixée par une liaison dynamique à la surface de freinage (9) du carter (2),
et que l'on utilise un élément de ressort (27) entre la pièce façonnée (11) et l'extrémité du carter (2) opposée aux surfaces de freinage coniques (9).

2. Dispositif selon la revendication 1, caractérisé en ce que l'un des supports (5) se présente sous forme d'un oeillet, avec un boulon (25) passant par son oeil, pour le raccordement de ce support à l'une des surfaces (17) ou (18),
et que l'autre support (5) comporte, outre son carter tubulaire (2), des organes de fixation transversaux, se présentant en particulier sous forme de tubulures (6) pour boutons (26),
et que ce support est, par l'intermédiaire des boutons, relié à l'autre surface (17 ou 18).

3. Dispositif selon la revendication 1, caractérisé en ce que la broche est disposée dans le carter (2) et axialement par rapport à ce dernier, et que l'on prévoit la pièce façonnée (11) le long de l'axe longitudinal (X) du carter (2), tout comme on prévoit aussi, sur chacun de ses côtés, une butée, ainsi qu'un disque terminal (10) limitant axialement cette dernière, et qu'un ressort est serré entre au moins une butée et un disque terminal (10).

4. Dispositif selon la revendication 1, caractérisé en ce que la pièce façonnée (11) est conçue comme un écrou cylindrique, sur lequel est rapportée une surface de freinage (24), et que l'on prévoit pour cette surface de freinage une surface de freinage conique (9) sur la paroi intérieure du carter (2).

5. Dispositif selon la revendication 1, ce dispositif pouvant être utilisé pour l'assise d'une chaise, en particulier d'une chaise tournante (19), cette assise étant constituée de trois pièces fonctionnelles, une pièce fonctionnelle étant un corps de base (22) pouvant être relié à un poteau support de chaise, une autre pièce fonctionnelle étant une fixation de la plaque d'assise, reliée à ce dernier par articulation, et une dernière pièce fonctionnelle étant un support de dossier, lui aussi fixé par articulation au corps de base, ces pièces fonctionnelles étant reliées les unes aux autres par l'intermédiaire de leurs axes d'articulation, qui autorisent un mouvement de rabattement, la pièce fonctionnelle conçue comme un support de dossier (20) étant raccordée à la pièce fonctionnelle conçue comme un corps de base (22) et fixée au montant support, et étant guidée en pouvant se déplacer contre la pièce fonctionnelle conçue comme une fixation de la plaque d'assise, le dispositif (1), conçu comme un organe de fixation, étant prévu au niveau du support d'assise pour bloquer le déplacement des pièces fonctionnelles,
caractérisé en ce que le dispositif (1) est raccordé d'une manière articulée d'une part au support de dossier (20) et d'autre part au corps de base (22), par l'intermédiaire de leur support particulier (5).
